# EUROPÄISCHE PATENTANMELDUNG

(11) **EP 0 899 697 A2**
(43) Veröffentlichungstag der Anmeldung: **03.03.1999**
(21) Anmeldenummer: 98116311.6
(22) Anmeldetag: 28.08.1998
(51) Int. Cl.: G07C 7/00, G01P 1/14

(54) **Fahrtschreiber**

(30) Priorität: 01.09.1997 DE 19738137
(71) Anmelder: Firma EKdesign GmbH, 85221 Dachau (DE)
(72) Erfinder: Hanke, Michel, 80469 München (DE)
(74) Vertreter: Baronetzky, Klaus, Dipl.-Ing.

(57) **Zusammenfassung**

Ein Fahrtschreiber weist einen Rahmen auf, der ein Aufzeichnungsmedium und mindestens ein Markierungselement für die Aufzeichnung eines fahrzeugbezogenen Parameters auf dem Aufzeichnungsmedium aufnimmt. Das Aufzeichnungsmedium ist auf einer Schublade gelagert ist und die Schublade lagert ein Getrieberad, das mit einem ersten Getriebesegment in Antriebsverbindung steht, welches mit Rahmen verbunden ist. Das erste Getrieberad ist mit einem zweiten Getrieberad drehfest verbunden, welches mit einem zweiten Getriebesegment in Antriebverbindung steht, wobei das erste und das zweite Getriebesegment voneinander beabstandet gelagert sind.

## Beschreibung

Die Erfindung betrifft einen Fahrtschreiber gemäß dem Oberbegriff von Anspruch 1.

Ein derartiger Fahrtschreiber ist aus der EP 0 624 856 A2 bekannt. Dieser Fahrtschreiber weist eine Schublade für die Aufnahme einer Diagrammscheibe als Aufzeichnungsmedium auf, die in an sich bekannter Weise drehbar gelagert ist. Um eine mißbräuchliche Verwendung auszuschließen, weist die Schublade besondere Vorrichtungen für die Verriegelung auf, nämlich einen Schließzylinder in Verbindung mit einem entsprechenden Schlüssel.

Nach der Art einer Schrankschublade kann auch die Schublade des dortigen Fahrtschreibers ausgezogen werden, wobei der Schlüssel als Griff dienen soll. Der Rahmen für die Schublade ist ziemlich eng und nahezu spielfrei gegenüber der Schublade ausgebildet, allein schon, um zu erreichen, daß die Schublade noch in ein Gehäuse paßt, das in einem handelsüblichen Einbauschacht für ein Radio oder dergleichen aufgenommen werden kann.

Ein derartiger Fahrtschreiber hat sich jedoch nicht bewähren können, nachdem in der Praxis die Betätigung der Schublade unbefriedigend ist. Zwar läßt sich bei entsprechend sorgfältiger, beidhändiger Handhabung eine verkantungsfreies Einführen der Schublade gewährleisten. Die Schublade ist bei dieser Lösung zusätzlich durch die Aufnahme von Führungen für Datenkarten belastet, so daß sie vergleichsweise groß und voluminös ist. Aufgrund der Vorgabe, die Abmessungen eines Einbauschachtes nicht zu überschreiten, müssen die Wände des Gehäuses für die Aufnahme der Schublade vergleichsweise dünn gehalten sein.

Andererseits muß die Schublade elektrisch über eine Vielzahl von Kabeln mit dem Rahmen verbunden werden, allein schon um die logische Verbindung zu den gehäusefesten Schaltern und weiteren gehäusefesten elektrischen Bauteilen zu ermöglichen. Dies bedingt entsprechende flexible Kabelverbindungen, die in besonderer Weise geführt werden müssen, um die Bewegung der Schublade nicht zu beeinflussen.

Wenn beispielsweise ein Kabel sich aufgrund einer zu raschen Bewegung der Schublade hinter der Schublade querlegt, ist das vollständige Einschieben der Schublade - und damit die Verriegelung über die dortige Verriegelungsvorrichtung blockiert -, und es besteht die Gefahr von Fehlbedienungen, wenn es dem mit der Bedienung des Fahrtschreibers betrauten Fernfahrers nicht auf Anhieb gelingt, die für die Funktion erforderliche Verriegelung vorzunehmen. Ein zu hoher Krafteinsatz bei dem Versuch der Verriegelung führt zudem zu einer Beschädigung des Geräts.

Ein weiteres Problem besteht in der Führung der Schublade im Vergleich zu dem Durchmesser der für die Aufzeichnung der Fahrer- und/oder Beifahrerdaten vorgesehenen Diagrammscheibe. Zwar ist dieser Durchmesser eindeutig kleiner als die Einbaumaße eines Einbauschachts. Die Schublade bedarf jedoch für eine einigermaßen sichere Führung eines Endanschlags, der sie in ausgezogener Stellung noch sicher hält, wobei die Zeichnung der EP 0 624 856 A2 bereits die maximale Auszugslänge darstellt.

Während die Datenkarten ohne weiteres griffgünstig entnommen und eingeführt werden können, erfordert die Handhabung der Diagrammscheibe eine gewisses Geschick, indem sie nämlich in den verbleibenden, knappen Schlitz zwischen den gehäusefesten Schaltern und der Oberseite der Schublade eingeführt und zugleich durch leichtes Aufbiegen auf dem Drehmitnehmer zentriert werden muß. Diese Handhabung verhindert eine rasche und unkomplizierte Betätigung und führt auch zu der Gefahr von Fehlbedienungen, indem die Scheibe beispielsweise geknickt wird.

Nachdem die Diagrammscheiben ziemlich teuer sind, sind die betroffenen Fernfahrer von ihren Arbeitgebern regelmäßig dazu angehalten, keine Diagrammscheiben zu verschwenden, so daß die Gefahr besteht, daß eine leicht geknickte Diagrammscheibe doch noch verwendet wird. Diese kann jedoch gegebenenfalls zur Beschädigung empfindlicher Markierungsnadeln der Fahrtschreibers führen, so daß auch insofern eine Gefahr von Beschädigungen besteht.

Demgegenüber liegt der vorliegenden Erfindung die Aufgabe zugrunde, eine Fahrtschreiber gemäß dem Oberbegriff von Anspruch 1 zu schaffen, der eine geringere Beschädigungswahrscheinlichkeit bietet und hinsichtlich der Akzeptanz verbessert ist.

Diese Aufgabe wird erfindungsgemäß durch Anspruch 1 gelöst. Vorteilhafte Weiterbildungen ergeben sich aus den Unteransprüchen.

Erfindungsgemäß ist die Schublade in besonderer Weise in dem Rahmen geführt, wobei es sich versteht, daß hier unter Rahmen eine beliebige, gehäusefeste und für den im wesentlichen stationären Einbau in einen Einbauschacht vorgesehene Konstruktion zu verstehen ist. Überraschend ermöglicht die erfindungsgemäße Anordung der vorgesehenen Getriebe trotz der zusätzlichen Bauelemente, die einen zusätzlichen Einbauraum erfordern, eine verbesserte Handhabung mit geringerer Beschädigungswahrscheinlichkeit.

Nachdem die Führung der Schublade erfindungsgemäß motorisch erfolgt, kann durch geeignete Maßnahmen sichergestellt werden, daß die flexiblen Kabel stets in der gleichen Schlaufe geführt werden, so daß nicht durch ein zu rasches Schließen der Schublade die Kabelschlaufe von ihrer vorgesehenen Bewegungsbahn abweichen kann. Überraschend erlauben die erfindungsgemäßen Maßnahmen eine besonders große Auszugslänge der Schublade im Verhältnis zur zur Verfügung stehenden Einbaulänge. Die erfindungsgemäße Führung mit dem an der Schublade gelagerten Getrieberad erlaubt eine kontrollierte und mechanisch sichere Steuerung der Einfahr- und Ausfahrbewegung der Schublade bis zu einem Bereich, der ein knitterfreies Wechseln der Diagrammscheibe ermöglicht.

Trotz dieser besonders kompakten Anordung ermöglicht die erfindungsgemäße Schublade darüberhinaus eine besondere Gleichlaufsteuerung. Bevorzugt ist hierzu eine durchgehende Welle vorgesehen, die sich am rückwärtigen Ende über die Schublade erstreckt und die drehfest beide Getrieberäder aufnimmt. Beide Getrieberäder laufen synchron auf symmetrisch zueinander angeordneten Getriebesegmenten.

Damit ergibt sich eine Verkantungssicherheit auch bei manuellem Auszug oder Einschub der Schublade. Bei motorischem Antrieb wird vermieden, daß die bei einer Verkantung regelmäßig erzeugte Selbstverstärkung der Verkantungskräfte die Verkantung noch verstärkt. Dies gilt auch für den Fall, daß der Antrieb vergleichsweise leichtlaufend und damit nicht völlig spielfrei ausgebildet ist, da bei zwei formschlüssigen Antrieben, die synchron zueinander laufen, der spielbedingt nacheilende Antrieb stets stärker wirkt und damit praktisch eine Selbstzentrierung gegenüber den gefürchteten Verkantungskräften bereitgestellt wird.

Während eine Zahnstangenantrieb regelmäßig eine Baulänge entsprechend der Zahnstangenlänge erfordert, läßt die erfindungsgemäße Lösung der Anordung von Getriebesegmenten seitlich im Rahmen der Schublade in Kombination mit den erfindungsgemäßen Getrieberädern am hinteren Ende der Schublade auch bei ausgesprochen kurzer Baulänge eine motorisch gesteuerte Bewegung der Schublade zu, die störunempfindlicher als eine mechanische und verkantungsträchtige Führung der Schublade ist.

Somit läßt sich eine verbesserte Bedienbarkeit gewährleisten, wobei überraschend der zur Verfügung stehende Bauraum nicht überschritten wird, obwohl ein zusätzlicher Motor mit dem entsprechenden Getriebe eingesetzt wird, der ein verbessertes Ausfahren der Schublade mit leichterer Bedienung der Diagrammscheibe ermöglicht.

In einer vorteilhaften Ausgestaltung der Erfindung, die eine lineare Auszugsbewegung der Schublade anstrebt, ist es vorgesehen, die Führung der Schublade über den Eingriff zwischen den Getrieberädern und den nach unten weisenden Getriebesegmenten einerseits und zusätzlich über eine Gleitführung mit einem von den Getrieberädern beabstandeten Gleitelement zu gewährleisten. Der horizontale Abstand kann hierbei ausnahmsweise etwa 1/5 der Baulänge der Schublade betragen, ohne daß die erforderliche Stabilität der Führung aufgegeben würde. Damit kann aber die Schublade über einen Bereich von 4/5 ihrer Gesamtlänge ausgefahren werden, so daß die Diagrammscheibe mit ihrem gesamten Umfang keine Überlappung durch den Rahmen oder das Gehäuse des Fahrtschreibers erfährt.

Bevorzugt sind die Getrieberäder in einer ersten vertikalen Ebene und die Gleitelemente in einer zweiten vertikalen Ebene angeordnet, die von der Ebene der Getrieberäder beabstandet, insbesondere unterhalb dieser angeordnet ist. Damit können die Getrieberäder und die Gleitelemente in der Projektion von vorne platzsparend übereinander angeordnet sein.

Die Getrieberäder können jedoch auch auf der gleichen vertikalen Ebene wie die Gleitelemente angeordnet sein. Zweckmäßig sind sie dann der Schublade näher liegend und ihr seitlich unmittelbar benachbart, während die Gleitelemente seitlich außerhalb dieser angeordnet sind.

In einer weiteren, besonders bevorzugten Ausgestaltung ist es vorgesehen, daß die Welle für das Getrieberad zugleich auch in einer Kulissenführungsnut läuft, wobei bevorzugt ein von der Schublade bezogen auf das Getrieberad abgewandter Bereich der Welle, der nach der Art eines Zapfens vorsteht, für die Führung eingesetzt wird. Dieser Bereich kann in einer Kulissenführungsnut laufen, die die lineare Bewegung der Schublade über die gesamte Auszugslänge ermöglicht.

In einer weiteren, besonders bevorzugten Ausgestaltung der Erfindung ist es vorgesehen, die Kulissenführung und das Getriebesegment beidseitig der Schublade je von der linearen Ausgestaltung derart abweichen zu lassen, daß sich beim Ausfahren der Schublade automatisch eine Schwenkbewegung nach unten zur verbesserten Handhabung ergibt. Es versteht sich, daß in diesem Falle eine Drehbewegung um ein Schwenk-Gleitelement bereitgestellt werden muß, wobei der geforderte Schwenkwinkel in weiten Bereichen an die Erfordernisse anpaßbar ist.

Besonders günstig ist es auch, daß mit dem gleichen mechanischen Aufbau lediglich durch Austausch der Seitenteile des Rahmens mit entsprechend entweder geraden oder gebogenen Kulissenführungen und Getriebesegmenten mit dem im übrigen gleichen Fahrtschreiber eine je nach Wahl des Benutzers gerade oder in der gewünschten Weise gebogene bzw. Schwenkbewegung der Schublade zur Verfügung gestellt werden kann.

In einer weiteren, besonders bevorzugten Ausgestaltung ist es vorgesehen, daß mit der Schwenkbewegung zugleich auch die Diagrammscheiben von einem Zentrierdorn, der sie aufnimmt, abgehoben werden.

Die Diagrammscheibe bietet sich bei ausgefahrener Schublade bei dieser Ausgestaltung dem Benutzer griffgünstig dar, während über eine - in den Zeichnungen nicht dargestellte - Einführschräge dafür Sorge getragen werden kann, daß eine knitterfreie Einführung der Diagrammscheibe gewährleistet wird.

Gemäß einem weiteren, besonders vorteilhaften Aspekt der vorliegenden Erfindung ist es möglich, die elektronische Ansteuerung wahlweise so umzuschalten, daß die Schublade beim Ausfahren in einem Zuge zunächst eine lineare und dann eine Schwenkbewegung ausführt und in der Auszugsstellung, also in der mechanisch maximal ausgefahrenen Stellung, anhält, wahlweise aber auch den Betrieb zu programmieren, der eine Zwischenstellung als Endanschlag fixiert, die als Freigabestellung bezeichnet wird und in welcher eine Entnahme und eine Einführung sowohl der Diagrammscheiben als auch von rahmenfest gelagerten SmartCards ohne weiteres möglich ist und zwischen der und der Einschubstellung die Schublade ausschließlich eine lineare Bewegung vornimmt.

Mit dieser Ausgestaltung ist es möglich, mit ein und derselben Ausführungsform eines Fahrtschreibers wahlweise einen herkömmlichen wie auch einen Schwenkbetrieb zu realisieren, ohne daß Mehrkosten hierdurch entstehen. Zusätzlich können bei Bedarf Fest-Gleitelemente den Schwenk-Gleitelementen vorgeschaltet sein, die in der gleichen Nut laufen und die Schublade bis knapp vor das Erreichen des Schwenkbeginns sicher abstützen.

Es versteht sich, daß anstelle der hier vorgestellten Ausgestaltung mit einer Nut und in dieser gleitenden Schwenk- bzw. Fest-Gleitelementen in gleicher Weise eine Kombination einer entsprechenden, rahmenfesten Schiene mit entsprechenden, an dieser laufenden Gleitelementen möglich ist, ohne den Bereich der Erfindung zu verlassen.

Gemäß einer weiteren, besonders bevorzugten Ausgestaltung der Erfindung ist es vorgesehen, daß eine automatische Abschaltung der Antriebsvorrichtung für die Schublade beim Endanschlag erfolgt. Hierzu kann in an sich bekannter Weise ein Stromsensor vorgesehen sein, der den Antrieb des Elektromotors abschaltet, sobald das aufzubringende Drehmoment - und damit der Speisestrom des Elektromotors - einen Schwellenwert übersteigt. Besonders günstig ist es, daß diese Endabschaltung zugleich als Sicherheitsabschaltung für die Schublade fungieren kann.

Wenn durch ein Hindernis das Hinein- oder Herausfahren der Schublade behindert oder verhindert wird, erfolgt mit der erfindungsgemäß bevorzugt vorgesehenen Abschaltung zugleich eine Abschaltung des Motors. Es ist dann möglich, nach der Art einer Folgeschaltung durch eine erneute Betätigung der Tiptaste für die Betätigung der Schublade die Fahrtrichtung der Schublade umzukehren und nach Beseitigung des Hindernisses dann einen erneuten Hinein- oder Herausfahrprozeß einzuleiten, nachdem die je zugeordnete Endstellung erreicht ist.

Gemäß einer weiteren, bevorzugten Ausgestaltung wird durch die Auslösung des Schwellenschalters, der insofern ein Hindernis in der Bewegung anzeigt, dann bereits die Fahrtrichtung der Schublade umgekehrt, wenn die Auslösung des Schwellenschalters nicht an einer Endposition der Bewegung erfolgt.

Gemäß einer weiteren besonders bevorzugten Ausgestaltung ist es vorgesehen, daß der Motor der Schublade zugleich als Generator ausgebildet ist. Der Antriebszug für die Schublade ist bei dieser Ausgestaltung nicht selbsthemmend, sondern dementsprechend freilaufend. Wenn der Benutzer die Schublade beispielsweise aus ihrer Auszugsstellung leicht anhebt, dreht sich bei dieser Ausführungsform der Motor und erzeugt damit an seinen Klemmen eine Signalspannung, wobei er insofern als Generator wirkt. Diese Signalspannung wird erfaßt und von der Ansteuerelektronik als Signal für den Antrieb des Motors in die betreffende Richtung interpretiert, so daß eine vom Benutzer manuell eingeleitete Bewegung der Schublade von der Ansteuerelektronik fortgesetzt wird.

Gemäß einem weiteren besonders vorteilhaften Aspekt der Erfindung ist es vorgesehen, daß Datenkarten oder SmartCards im Gehäusebereich angeordnet sind. Diese Ausgestaltung erlaubt die kompakte und montagefreundliche Anordnung der Führungen für die SmartCards, die je unmittelbar auf der Steuerplatine angebracht sein können. Dennoch kann die von innen an der Front der Schublade angebrachte Blende sich so überlappend über die SmartCards erstrecken, daß eine Entnahme bei geschlossener Schublade nicht zerstörungsfrei möglich ist. Ein mißbräuchlicher Tausch der SmartCards ist damit ausgeschlossen.

Weitere Vorteile, Einzelheiten und Merkmale ergeben sich aus der nachfolgenden Beschreibung eines Ausführupgsbeispiels anhand der Zeichnung.

Es zeigen:
- Fig. 1: eine perspektivische Ansicht eines erfindungsgemäßen Fahrtschreibers in einer Ausführungsform mit vollständig ausgefahrener Schublade;
- Fig. 2A bis 2C: die Einschubstellung, die Freigabestellung und die ausgezogene Stellung der Schublade in seitlicher Ansicht für einen Fahrtschreiber gemäß der Ausführung in Fig. 1;
- Fig. 3A: einen Schnitt entlang der Linie 3A - 3A aus Fig. 2A;
- Fig. 3B: einen Schnitt entlang der Linie 3B - 3B aus Fig. 2A; und
- Fig. 4: einen horizontalen Schnitt durch die Ausführungsform gemäß Fig. 1.

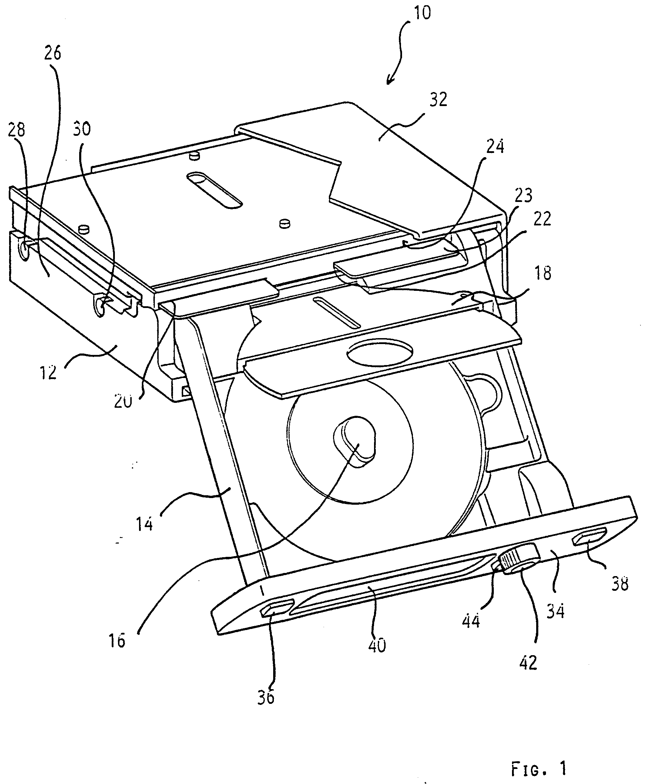

Der in Fig. 1 dargestellte Fahrtschreiber 10 weist einen Rahmen 12 und eine Schublade 14 auf, die in dem Rahmen beweglich geführt ist. Die Schublade 14 dient der Aufnahme eines Aufzeichnungsmediums wie einer Diagrammscheibe, das auf einem von der Kreisform abweichenden Zentrierdorn 16 verdrehsicher gehalten ist und über das Markierungselemente, die nachstehend im einzelnen beschrieben sind, Markierungen aufgebracht werden können. Ein Aufzeichnungsmedium ist bevorzugt als Diagrammscheibe ausgebildet, auf dem Kurven zur Darstellung mindestens der Geschwindigkeit des Fahrzeugs, bevorzugt aber zusätzlich auch der Motordrehzahl, der Wach-/Schlafzeit des Fahrers weiterer Parameter vorgesehen ist.

Die Diagrammscheibe, die meist aus Reaktionsdurchschreibepapier aufgebaut ist, ist auf den Zentrierdorn 16 aufbringbar und von diesem manuell entfernbar. Bevorzugt ist hierzu die in Fig. 1 dargestellte, geschlitzte Haltevorrichtung 18 vorgesehen, die das Aufzeichnungsmedium trägt und die in der in Fig. 1 dargestellten Position der Schublade das Aufzeichnungsmedium von dem Zentrierdorn 16 abhebt.

Der Rahmen 12 trägt und führt die Schublade 14 in einer erfindungsgemäß besonderen Weise, wobei die Schublade sich zwangsgeführt bei der Auszugbewegung zunächst translatorisch, also bei waagrechter Einbaulage waagrecht, bewegt, um dann nach unten geschwenkt zu werden. Diese Bewegung wird über eine Kulissenführung gesteuert, deren Einzelheiten nachfolgend unter Bezugnahme auf die weiteren Figuren erläutert werden.

Der Rahmen trägt nebeneinander angeordnete Führungen 20 und 22 für Datenkarten oder SmartCards 23, die dem Fahrer und dem Beifahrer zugeordnet sind und die die auf der Papierscheibe aufgezeichneten Daten auch elektronisch aufzeichnen. Die Führungen 20 und 22 sind in einer Stirnfläche 24 des Rahmens 12 ausgebildet und zwar zwischen der Schublade und dem oberen Rand des Rahmens. Beide Führungen erstrecken sich waagrecht und sind auf eine gemeinsame - hier nicht dargestellte - Platine oder gedruckte Schaltung montiert.

Obwohl eine einstückige Bauweise des Rahmens möglich ist, zeigt das hier dargestellte Ausführungsbeispiel einen mehrgliedrigen Rahmen 12, wobei Seitenschenkel, von denen aus Fig. 1 ein Seitenschenkel 26 ersichtlich ist, über Befestigungselemente 28 und 30, beispielsweise über Schrauben, an weiteren Teilen des Rahmens 12 befestigt ist.

Der Rahmen 12 ist von einem Gehäuse 32 umgeben, das in Fig. 1 teilweise aufgebrochen dargestellt ist.

Die Schublade trägt an ihrem vorderen Ende eine Blende 34, die von hinten an der Schublade angeschraubt ist. Bevorzugt nimmt die Blende 34 Bedienungs- und Anzeigeelemente auf, wobei in dem dargestellten Ausführungsbeispiel je ein Bedientaster 36 und 38 für den Fahrer und den Beifahrer vorgesehen sind, mit welchen beispielsweise zwischen Fahrzeiten, Pausezeiten und Schlafzeiten umgeschaltet werden kann.

Ferner ist ein Anzeigefeld 40 vorgesehen, das über eine Menuführung verschiedene Informationen hinsichtlich der abgespeicherten Werte bereitstellt. So ist es beispielsweise möglich, die maximale pausenfreie Fahrtzeit entweder additiv anzuzeigen, oder nach der Art eines Countdowns die verbleibende mögliche Fahrtzeit wiederzugeben. Die Bediener können gewünschtenfalls auch ein Alarmsignal kurz vor Ablauf der Fahrtzeit einprogrammieren, das auch akustisch unterstützt sein kann. Für die Kommunikation insofern ist ein Bedienknopf 42 vorgesehen, der eine Point-and-Shoot-Funktion im Rahmen der Menuführung erlaubt.

Darüberhinaus ist eine Öffnungstaste 44 vorgesehen, deren Betätigung zum Ausfahren der Schublade führt, wenn die Schublade eingefahren ist, und deren Betätigung die Schublade einfährt, wenn sie in der ausgezogenen Stellung ist. Es versteht sich, daß die Art und Anordnung der Bedienelemente in weiten Bereichen an die Erfordernisse anpaßbar ist. So ist es grundsätzlich auch möglich, eine Mehrzahl an Tasten vorzusehen, die die Menüführung entbehrlich macht. Alternativ ist die Öffnungstaste 44 gehäusefest gelagert.

In Hinblick auf die vergleichsweise geringen Kosten von Anzeigen, die entweder als hinterleuchtete Flüssigkeitskristallanzeigen oder beispielsweise als Leuchtdioden-Matrixanzeigen aufgeführt sein können, ist die hier dargestellte Ausgestaltung bevorzugt. Zudem ist erfindungsgemäß besonders günstig, daß durch die Bedienungsoptionen, über welche Fahrer und Beifahrer je die gewünschten Signalisierungen einstellen können, die Akzeptanz des erfindungsgemäßen Fahrtschreibers gefördert wird.

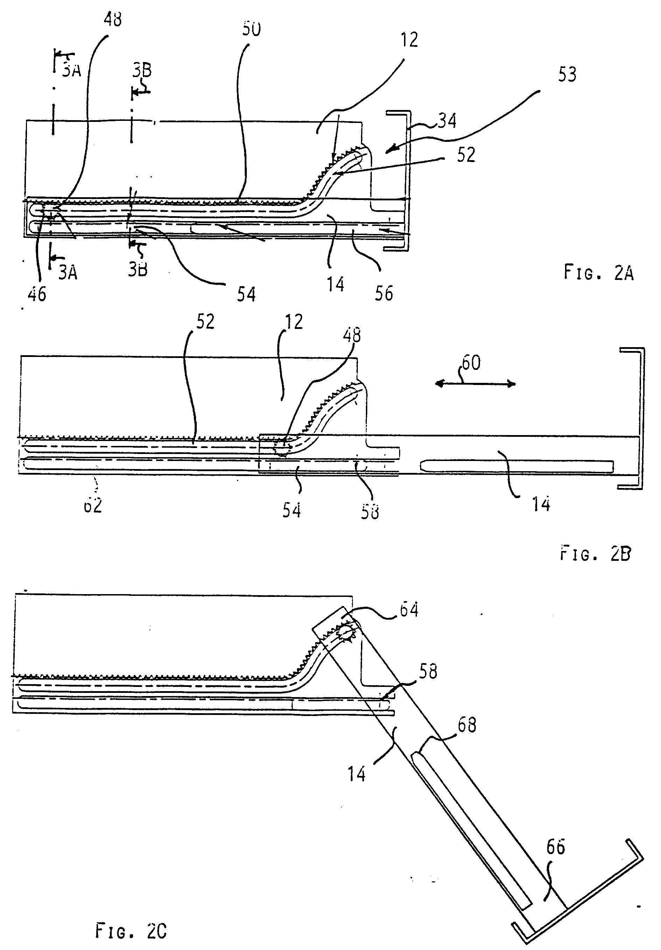

In Fig. 2A ist die Schublade 14 in der eingefahrenen Stellung dargestellt. Hier wie auch in den weiteren Figuren weisen gleiche Bezugszeichen auf gleiche Teile hin. Die Schublade 14 trägt ein erstes Getrieberad 46, das auf einer Welle 48 drehfest gelagert ist und auf einem ersten Getriebesegment 50 läuft. Das erste Getriebesegment 50 ist nach der Art einer Zahnstange ausgebildet, mit der das erste Getrieberad 46 in Eingriff steht, jedoch endseitig in der weiter unten näher erläuterten Weise gebogen.

Zur Gewährleistung der Gleichlaufsteuerung ist auf beiden Enden der Welle 48 ein Getrieberad 46 und 47 angeordnet, das je auf einer entsprechenden Kulissenführung oder einem Getriebesegment 50 und 51 abläuft.

Das Getriebesegment 50 ist am Rahmen 12 ausgebildet. Um das erste Getrieberad 46 in Eingriff zu halten, ist die Welle 48 in einer rahmenfesten Führungsnut 52 geführt, in die sie mit ihrem zapfenfömigen Endbereich eintritt, und die dem Getriebesegment 50 unmittelbar benachbart ist. Das erste Getriebesegment 50, das mit dem ersten Getrieberad 46 in Eingriff steht, bildet zusammen mit der Kulissen-Führungsnut 52 und der in dieser laufenden Welle 48 eine Kulissenführung 53.

Der Durchmesser des ersten Getrieberads 46 ist besonders klein gewählt, so daß lediglich die Zähne gegenüber der Welle 48 vorstehen, und damit die Möglichkeit besteht, daß die Zähne des Getriebesegments 50 unmittelbar an die Führungsnut 52 angrenzen, wodurch ein vergleichsweise kleines Drehmoment für den Antrieb der Schublade erforderlich ist und eine hohe Untersetzung der Mototdrehzahl bereitgestellt werden kann.

Die Schublade 14 trägt ferner ein Schwenk-Gleitelement 54 und ein Fest-Gleitelement 56. Das Schwenk-Gleitelement 54 ist an einer besser aus Fig. 2b ersichtlichen Schwenkachse 58 an der Schublade gelagert, wobei die Ausrichtung der Schwenkachse senkrecht zur Auszugsrichtung 60 der Schublade verläuft und sich im wesentlichen waagrecht erstreckt. Wie sich aus dem Vergleich der Figuren 2B und 2C ergibt, läßt sich die Schublade um die Schwenkachse 58 verschwenken. Beide Gleitelemente 54 und 56 laufen in einer gemeinsamen Nut 62, die nach vorne offen ist, so daß das Fest-Gleitelement 56 außer Eingriff der Führungsnut gelangen kann.

Während in Fig. 2A die eingeschobene Stellung der Schublade 14 in dem Rahmen 12 dargestellt ist, zeigt Fig. 2B eine mittlere Stellung der Schublade, die auch als Freigabestellung bezeichnet wird. Zwischen der eingeschobenen Stellung gemäß Fig. 2A und der Freigabestellung gemäß Fig. 2B wird die Schublade 14 ausschließlich linear, also translatorisch bewegt. Die Führung erfolgt zwischen dem Schwenk-Gleitelement 54 und der Nut 62 einerseits, der Welle 48 und der Kulissenführungsnut 52 andererseits. Die Welle 48 ist von der Schwenkachse 58 sowohl horizontal als auch vertikal beabstandet, wobei der horizontale Abstand weniger als die Höhe des Gehäuses 32 beträgt. Bevorzugt beträgt der horizontale Abstand 8 Prozent bis 60 Prozent, und insbesondere etwa 20 Prozent der Auszugslänge der Schublade.

Bei der Bemessung des Abstands ist zu berücksichtigen, daß der durch den Abstand vorgegebene Hebelarm so groß wie möglich sein sollte, um die Materialbeanspruchung geltend zu halten. Andererseits muß auch bei nach unten verschwenkter Schublade das Getrieberad 46 und die Welle 48 deutlich innerhalb der Rahmens verbleiben, so daß der Abstand dann größer gewählt werden kann, wenn der maximale Schwenkwinkel geringer sein soll.

Der vertikale Abstand kann nach den räumlichen Erfordernissen gewählt werden, wobei es grundsätzlich auch möglich wäre, die Kulissenführung 53 auf der gleichen vertikalen Ebene wie die Fest- und Schwenkgleitelemente 56 und 54 anzuordnen, nämlich nebeneinander.

Das Getriebesegment 50 und die Kulissen-Führungsnut 52 sind an dem vorderen Ende in besonderer Weise gebogen ausgebildet, wobei die dort vorliegende Form im wesentlichen die Form eines schrägliegenden, flach geschwungenen S aufweist. Diese Form stellt sicher, daß die Schublade 14 bei Annäherung an die ausgezogene Stellung gemäß Fig. 2C mit ihrem hinteren Ende 64 zunächst leicht und dann stärker angehoben und entsprechend mit ihrem vorderen Ende 66 abgesenkt wird. Die Bewegung erfolgt als Schwenkbewegung um die Schwenkachse 58, wobei sich aus dem Vergleich der Figuren 2A und 2C ergibt, daß die Schwenkachse 58 sich bezogen auf den Rahmen 12 nach vorne verlagert.

Insgesamt ergibt sich somit eine Kreisbewegung oder gewünschtenfalls eine Bogenbewegung der Schublade von der Freigabestellung in die ausgezogene Stellung gemäß Fig. 2C. Es ist bevorzugt, daß das Getriebesegment 50 als Teil der Kulissenführung 53 ausgebildet und damit ebenfalls geschwungen ist, während es grundsätzlich auch möglich wäre, das Getriebesegment der Nut 62 benachbart, und damit das Getrieberad der Schwenkachse 58 benachbart vorzusehen. Die hier bevorzugte Ausführungsform erlaubt jedoch eine sanftere und lagerschonendere Bewegung der Schublade 14, denn die aufgebrachten Antriebskräfte unterstützen je die Schwenkbewegung der Schublade 14.

Wie aus Fig. 2B und 2C ersichtlich ist, weist die das Fest-Gleitelement 56 eine Einführschräge 68 auf, die das Einführen des Fest-Gleitelements 56 in die Nut 62 erleichtert.

In der herausgefahrenen Stellung der Schublade 14 ist die Diagrammscheibe oder Papierscheibe frei zugänglich und gemäß Fig. 1 auf der Haltevorrichtung 18 von der Schublade 14 abgehoben. Zudem sind auch die Datenkarten oder SmartCards 23 frei zugänglich.

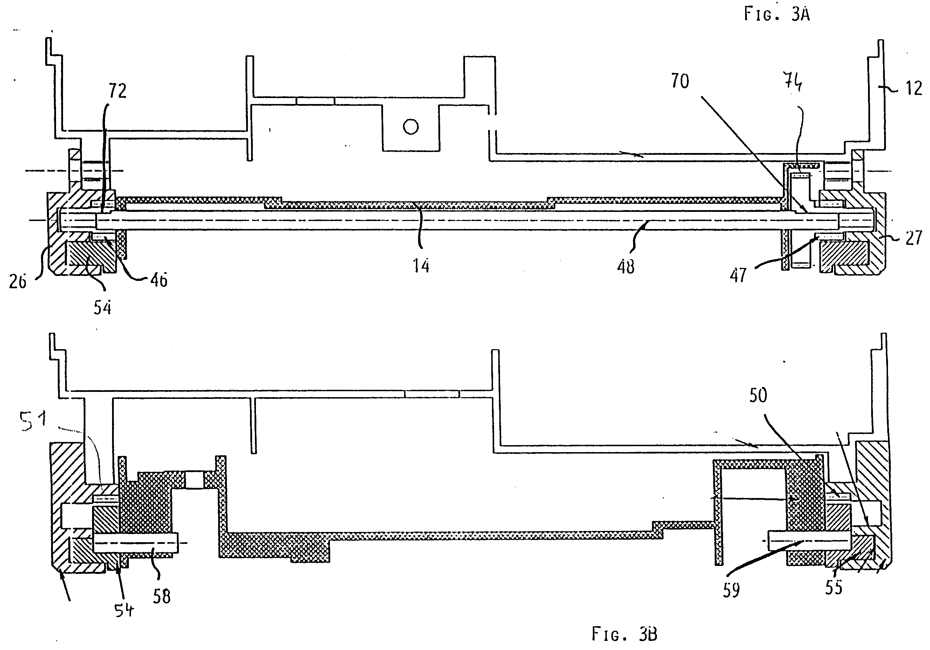

Aus Fig. 3A ist ein Schnitt entlang der Linie 3A-3A aus Fig. 2A ersichtlich. Die Welle 48 ist durchgehend durch die Schublade 14 ausgebildet, wobei sie endseitig je Abflachungen 70 und 72 aufweist, auf die die Getrieberäder 46 und 47 aufgesteckt sind. Aus Fig. 3A ist auch ersichtlich, daß der Rahmen 12 dreiteilig ausgebildet ist und zusätzlich zu dem Hauptkörper je dort angeflanschte Seitenschenkel 26 und 27 aufweist. Die dreiteilige Ausgestaltung erleichtert die Montage der Schubladenführung.

Wie aus Fig. 3A und Fig. 3B ersichtlich ist, sind sowohl die Schublade 14 als auch der Rahmen 12 nicht glatt ausgebildet, sondern weisen Absätze und unterschiedliche Bauhöhen auf. Hierdurch läßt sich je die erforderliche Funktionalität für den Einbau bestimmter Teile bereitstellen, und zudem dienen die Absätze der Aussteifung sowohl der Schublade 14 als auch des Rahmens 12.

Aus Fig. 3B ist die Anordnung der Schwenkachsen 58 und 59 ersichtlich. Die Schwenkachsen 58 und 59 sind als Zapfen ausgebildet, die in den Schwenk-Gleitelementen 54 und 55 eingepreßt sind und in entsprechenden Bohrungen in der Schublade schwenkbeweglich geführt sind.

Die Antriebsvorrichtung weist ein Getrieberad 74 und einen in Fig. 1 nicht dargestellten Antriebsmotor auf, die auf die Welle 48 und damit die Getrieberäder 46 und 47 wirken. Die Antriebsvorrichtung für die Bewegung der Schublade 14 ist in einer Raumecke der Schublade angeordnet, so daß der Bauraum der Schublade insgesamt optimal ausgenutzt wird.

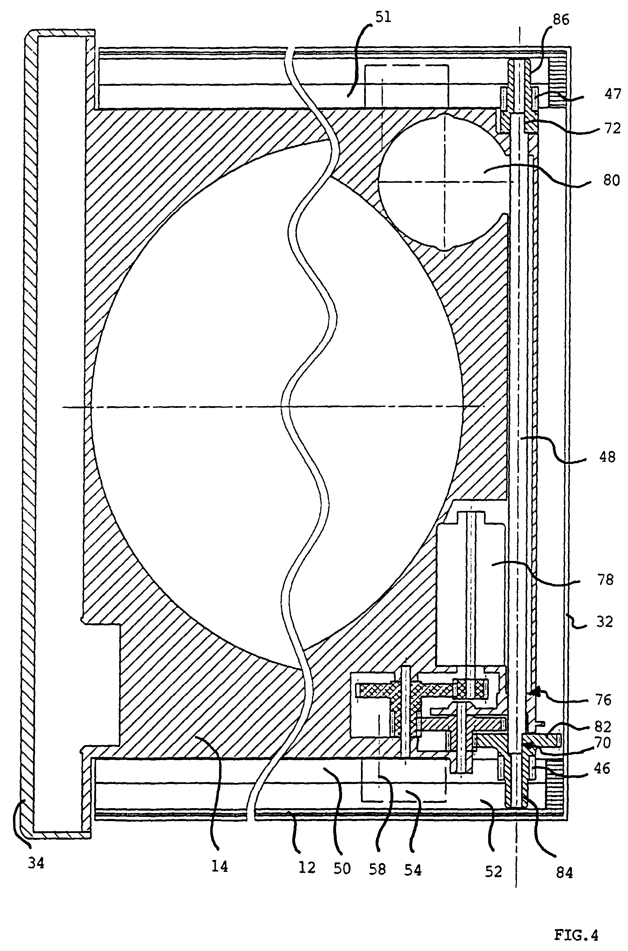

Wie aus Fig. 4 ersichtlich ist, ist die Welle 48 über ein Getriebe 76 in drehfester Verbindung mit dem Antriebsmotor 78 verbunden. Sowohl der Antriebsmotor 78 als auch das Getriebe 76 sind in einer Schublade 14 angeordnet, wobei der mittlere in Fig. 4 nicht schraffiert dargestellte Bereich für die Aufnahme der Diagrammscheibe bestimmt ist.

Ferner ist aus Fig. 4 die Anordnung des Antriebsmotors für die Diagrammscheibe schematisch ersichtlich, wobei in Fig. 4 eine kreisförmige Ausnehmung 80 für die senkrechte Lagerung dieses Antriebsmotors dargestellt ist.

Wie aus Fig. 4 ebenfalls ersichtlich ist, ist das Getrieberad 46 einstückig mit einem Antriebs-Zahnkranz 82 und auch mit dem Zapfen 84 verbunden, der sich in die Führungsnut 52 ersteckt. Diese Ausgestaltung ermöglicht eine preisgünstige hinterschneidungsfreie Herstellung, wobei es sich versteht, daß auch das Getrieberad 47 mit dem entsprechenden Zapfen 86 einstückig ausgebildet sein kann. Beide Teile sind über die Abflachungen 70 und 72 drehfest über die Welle 48 miteinander verbunden.

Bei Bedarf kann auf die Zapfen 84 und 86 noch ein spezieller Gleitschuh aufgesteckt sein, der die translatorische Bewegung des Zapfens 86 und 84 in der Führungsnut 52 von dessen Drehbewegung trennt und damit eine besonders hohe Lebensdauer ermöglicht.

## Patentansprüche

1. Fahrtschreiber, mit einem Rahmen, der ein Aufzeichnungsmedium und mindestens ein Markierungselement für die Aufzeichnung eines fahrzeugbezogenen Parameters auf dem Aufzeichnungsmedium aufnimmt, wobei das Aufzeichnungsmedium auf einer Schublade gelagert ist, dadurch gekennzeichnet, daß die Schublade (14) ein erstes Getrieberad (46) lagert, das mit einem ersten Getriebesegment (50) in Antriebsverbindung steht, welches mit dem Rahmen (12) verbunden ist und daß das erste Getrieberad (46) mit einem zweiten Getrieberad (47) drehfest verbunden ist, welches mit einem zweiten Getriebesegment (51) in Antriebsverbindung steht, wobei das erste und das zweite Getriebesegment (50,51) voneinander beabstandet gelagert sind.

2. Fahrtschreiber nach Anspruch 1, dadurch gekennzeichnet, daß das erste und das zweite Getrieberad (46,47) auf einer gemeinsamen Welle (48) drehfest gelagert sind, die von einem auf der Schublade (14) montierten Antriebsmotor drehbar ist.

3. Fahrtschreiber nach einem der vorhergehenden Ansprüche, dadurch gekennzeichnet, daß die beiden Getriebesegmente (50, 51) auf beiden Seiten unmittelbar je angrenzend an die Schublade (14) rahmenfest angeordnet sind und die Schublade (14) Seitenwände aufweist, die von der Welle (48) der Getrieberäder (46,47) durchtreten sind.

4. Fahrtschreiber nach einem der vorhergehenden Ansprüche, dadurch gekennzeichnet, daß die Getrieberäder (46,47), bezogen auf die Auszugsrichtung der Schublade (14), am rückwärtigen Ende der Schublade (14) gelagert sind.

5. Fahrtschreiber nach einem der vorhergehenden Ansprüche, dadurch gekennzeichnet, daß die Schublade (14) beidseitig mit Gleitelementen (54,55,56) versehen ist, die eine Führung für die Schublade (14) bilden und die von den Getrieberädern (46,47), insbesondere in Auszugsrichtung der Schublade (14) betrachtet beabstandet sind.

6. Fahrtschreiber nach einem der vorhergehenden Ansprüche, dadurch gekennzeichnet, daß die Getriebesegmente (50,51) in ihrem bezogen auf die Auszugsrichtung der Schublade (14) rückwärtigen Teil gerade verlaufen und in ihrem vorderen Bereich gekrümmt sind, insbesondere im wesentlichen in Form eines schlanken schrägen S aufwärts gekrümmt sind.

7. Fahrtschreiber nach einem der vorhergehenden Ansprüche, dadurch gekennzeichnet, daß die Schublade (14) beidseitig je ein Schwenk-Gleitelement (54,55) aufweist, das eine translatorische Führung der Schublade (14) im wesentlichen in Auszugsrichtung und zusätzlich eine Verschwenkung der Schublade (14) um eine Schwenkachse (58,59) erlaubt.

8. Fahrtschreiber nach einem der vorhergehenden Ansprüche, dadurch gekennzeichnet, daß dem Getriebesegment (50,51) benachbart eine Kulissenführungsnut (52) rahmenfest ausgebildet ist, die die Welle (48) der Getrieberäder (46,47) aufnimmt und diese in Eingriff mit dem je zugeordneten Getriebesegment (50,51) hält.

9. Fahrtschreiber nach einem der vorhergehenden Ansprüche, dadurch gekennzeichnet, daß der Antriebsmotor für den Antrieb der Schublade (14) in Auszugsrichtung in einer hinteren Raumecke der Schublade (14) angeordnet ist, die sich radial außerhalb einer Diagrammscheibenlagerung erstreckt, in oder auf welcher eine Diagrammscheibe als Aufzeichnungsmedium aufnehmbar ist.

10. Fahrtschreiber nach einem der vorhergehenden Ansprüche, dadurch gekennzeichnet, daß das Getriebesegment (50) mit seiner für den Eingriff vorgesehenen Seite nach unten weist.

11. Fahrtschreiber nach einem der vorhergehenden Ansprüche, dadurch gekennzeichnet, daß die Getrieberäder (46,47) in einer ersten vertikalen Ebene angeordnet sind und die Gleitelemente (54,55) in einer zweiten vertikalen Ebene angeordnet sind, die von der Ebene der Getrieberäder beabstandet, insbesondere unterhalb dieser angeordnet ist.

12. Fahrtschreiber nach Ansprüche 1 bis 10, dadurch gekennzeichnet, daß die Getrieberäder (46,47) auf der gleichen vertikalen Ebene wie die Gleitelemente und insbesondere der Schublade (14) näher liegend angeordnet sind.

13. Fahrtschreiber nach einem der vorhergehenden Ansprüche, dadurch gekennzeichnet, daß die Welle (48) die Getrieberäder durchtritt und in einem Zapfen ausläuft, der ggf. über einen Gleitschuh in einer Kulissenführungsnut geführt ist, die in dem Rahmen vorgesehen ist.

14. Fahrtschreiber nach einem der vorhergehenden Ansprüche, dadurch gekennzeichnet, daß ein Schwenk-Gleitelement (54) an der Schublade (14) angebracht und in einer Nut des Rahmens (12) geführt ist, wobei die Schwenkachse (58) des Schwenk-Gleitelements (54) horizontal und insbesondere auch vertikal von dem jeweiligen Getrieberad (46) beabstandet ist und der Abstand in horizontaler Richtung 8 bis 60%, bevorzugt etwa 20% der Bauhöhe des Rahmens entspricht.

15. Fahrtschreiber nach einem der vorhergehenden Ansprüche, dadurch gekennzeichnet, daß der Rahmen (12) und die Schublade (14) je eine feste Einheit bilden und die Bewegung der Schublade (14) beim Einschieben und Ausfahren über eine Gleichlaufsteuerung verkantungsfrei erfolgt.
